Europäisches Patentamt

(19) European Patent Office

Office européen des brevets

(11) Numéro de publication : **0 322 274 B1**

(12) **FASCICULE DE BREVET EUROPEEN**

(45) Date de publication du fascicule du brevet :
13.03.91 Bulletin 91/11

(51) Int. Cl.⁵ : **C10G 11/18**

(21) Numéro de dépôt : 88403152.7

(22) Date de dépôt : 12.12.88

(54) Procédé et dispositif de régénération de catalyseur en lit fluidisé.

(30) Priorité : 21.12.87 FR 8717822

(43) Date de publication de la demande :
28.06.89 Bulletin 89/26

(45) Mention de la délivrance du brevet :
13.03.91 Bulletin 91/11

(84) Etats contractants désignés :
BE DE ES GB GR IT LU NL

(56) Documents cités :
EP-A- 0 074 501
EP-A- 0 184 517
FR-A- 2 089 344

(73) Titulaire : **Société Anonyme dite: COMPAGNIE DE RAFFINAGE ET DE DISTRIBUTION TOTAL FRANCE**
**84, rue de Villiers**
**F-92300 Levallois Perret (FR)**

(72) Inventeur : **Mauleon, Jean-Louis**
**22, Avenue de l'Abreuvoir**
**F-78160 Marly-Le-Roy (FR)**
Inventeur : **Sigaud, Jean-Bernard**
**18 Boulevard de la République**
**F-92430 Vaucresson (FR)**

(74) Mandataire : **Jolly, Jean-Pierre et al**
**Cabinet Jolly 54, rue de Clichy**
**F-75009 Paris (FR)**

EP 0 322 274 B1

## Description

La présente invention concerne un procédé et un dispositif de régénération d'un catalyseur en lit fluidisé, permettant d'éliminer avec une quantité minimum d'oxygène le coke déposé sur un catalyseur au cours d'une réaction de conversion d'hydrocarbures. Elle concerne en particulier la régénération des catalyseurs de craquage catalytique.

On sait que l'industrie pétrolière utilise de façon usuelle des procédés de conversion, dans lesquels des molécules d'hydrocarbures à haut poids moléculaire et à point d'ébullition élevé sont scindées en molécules plus petites, qui peuvent distiller dans des domaines de températures plus faibles, convenant à l'usage recherché.

Le procédé le plus couramment employé dans ce but, à l'heure actuelle, est le procédé dit de craquage catalytique à l'état fluide (en anglais, Fluid Catalytic Cracking, ou encore procédé FCC). Dans ce type de procédé, la charge d'hydrocarbures est vaporisée par mise en contact à haute température avec un catalyseur de craquage, lequel est maintenu en suspension par les vapeurs de la charge. Après que l'on ait atteint par craquage la gamme de poids moléculaires désirée, le catalyseur est séparé des produits obtenus, strippé, réactivé par combustion du coke formé au cours de la réaction, puis remis en contact avec la charge à craquer.

Dans les procédés de ce type, l'abaissement souhaité des points d'ébullition résulte de réactions catalytiques et thermiques contrôlées, le procédé FCC étant naturellement mis en oeuvre de façon à ce que la section de conversion soit en équilibre thermique. Autrement dit, l'alimentation en catalyseur chaud régénéré doit être telle qu'elle puisse répondre aux diverses exigences thermiques de la section réactionnelle, à savoir, en particulier :

- le préchauffage de la charge liquide,
- la vaporisation de cette charge,
- l'apport de calories exigé par les réactions impliquées, lesquelles, globalement, sont endothermiques, et
- les pertes de chaleur du système.

Pour atteindre le plus rapidement possible l'équilibre thermique ci-dessus mentionné, il est donc important, non seulement, d'injecter les charges à craquer finement atomisées dans la zone réactionnelle à une température pouvant atteindre jusqu'à 400°C, mais également d'apporter la chaleur nécessaire par injection du catalyseur régénéré à une température plus élevée (pouvant être comprise entre 600 et 950°C), la chaleur emmagasinée par les grains de catalyseur provenant de la combustion du coke déposé au cours de la réaction de craquage.

L'étape de régénération du catalyseur en lit fluidisé est donc une étape très importante dans l'opération de craquage, mais elle pose des problèmes très délicats de fluidisation des grains de catalyseur par le fluide oxydant utilisé pour la combustion du coke, qui ne sont que partiellement résolus à l'heure actuelle.

En effet, on sait que l'on distingue plusieurs types de lits fluidisés, dont la nature varie en fonction des fluides et des particules considérés, ainsi que de la vitesse des fluides utilisés : on connaît ainsi des lits fluidisés denses, des lits mobiles ou bouillonnants, des lits circulant en phase fluidisée diluée etc..., et l'on passe de l'un à l'autre type en augmentant progressivement la vitesse du fluide ascendant.

Dans les régénérateurs en lit fluidisé de type classique, on réalise de préférence la combustion du coke déposé sur le catalyseur dans une chambre de régénération fonctionnant en lit de type fluidisé dense, dans lequel la vitesse du fluide ascendant, contenant l'oxygène, est généralement comprise entre 0,5 et 1,5 mètre par seconde. On peut ainsi réaliser un milieu sensiblement homogène, dans lequel les transferts de calories entre gaz et solides sont particulièrement rapides. On distingue, à ce stade, outre les lits fluidisés à rétromélange total, deux types de lit fluidisé : les lits fluidisés à co-courant et les lits fluidisés à contre-courant. Les lits fluidisés à contre-courant, dans lesquels le catalyseur contenant du coke est introduit dans la partie supérieure du lit et dans lequel le catalyseur au moins partiellement régénéré est prélevé à la base du même lit, sont particulièrement recherchés, dans la mesure où les grains de catalyseur y rencontrent au cours de leur progression un fluide de plus en plus riche en oxygène, ce qui permet en principe d'assurer une combustion complète de tout le coke qu'ils contiennent, tout en minimisant les points chauds qui risquent de désactiver le catalyseur.

Dans la pratique, cette combustion pose néanmoins de sérieux problèmes. En effet, il n'est pas possible, tout au moins lorsque l'on opère avec une seule chambre de combustion, d'effectuer la régénération à une température supérieure à 750°C et, de préférence, à 720°C, sans endommager au moins partiellement le catalyseur, du fait de la présence de vapeur d'eau dans le milieu réactionnel, vapeur d'eau qui provient, pour une part, de l'opération de strippage précédant la combustion ou de l'humidité introduite avec l'air d'oxydation et, pour une autre part, de la combustion d'hydrocarbures lourds déposés à la surface du catalyseur au cours de la réaction de craquage.

Or la combustion de carbone en gaz carbonique est très exothermique, et la régénération devient très difficile à réaliser dès que la quantité de coke déposé sur le catalyseur est importante. Pour pallier cette difficulté, il a été proposé, depuis longtemps (voir à cet effet les brevets US 2.985.584, US 3.909.392 et US 4.013.546), de favoriser autant que possible la combustion du coke solide en monoxyde de carbone (CO) gazeux, car cette réaction est beaucoup moins exothermique, puis de brûler ce monoxyde de carbone en envoyant les effluents gazeux de la combustion dans une chambre séparée pour récupérer la chaleur de combustion du monoxyde de carbone en gaz carbonique. Mais la combustion ménagée du coke possède également ses limites :

    – d'une part, si l'on favorise la formation du CO en limitant la quantité de fluide contenant l'oxygène injectée à la base du lit fluidisé, il n'est guère possible de brûler plus de 50 à 70% du coke déposé sur le catalyseur, ce qui, même si l'on opère en plusieurs étapes de combustion, est insuffisant pour restaurer l'activité initiale du catalyseur ;

    – d'autre part, si l'on augmente la quantité de fluide contenant l'oxygène injecté à la base du lit fluidisé, l'oxygène est alors en concentration suffisante pour que la transformation en $CO_2$ du CO entraîné dans la phase gazeuse ascendante entre en compétition avec l'oxydation du coke en CO ; cette transformation étant fortement exothermique, il en résulte, outre une consommation élevée d'oxygène, une température trop élevée du catalyseur, qui conduit à une désactivation permanente et rapide de ce catalyseur et excède souvent les limites de température des organes métalliques environnants ;

    – enfin, si l'on augmente encore le débit du fluide contenant l'oxygène, le lit fluidisé devient alors un lit fluidisé à co-courant ou un lit circulant et l'on perd les avantages de la combustion à contre-courant.

La présente invention vise à remédier à ces divers inconvénients grâce à un choix judicieux des conditions de fluidisation.

La présente invention a donc pour objet un procédé de régénération d'un catalyseur par combustion du coke déposé sur celui-ci au cours d'une réaction de conversion d'hydrocarbures, procédé dans lequel plus de 50% du coke est brûlé dans au moins une chambre de régénération fonctionnant en lit fluidisé, ce procédé étant caractérisé en ce que la combustion du coke est réalisée à une température n'excédant pas 750°C et, de préférence, 720°C, dans un lit fluidisé dans lequel les grains de catalyseur circulent essentiellement de haut en bas à contre-courant d'un fluide contenant de l'oxygène dont la vitesse superficielle ascendante, à la base du lit fluidisé, est comprise entre 1,2 et 3,5 mètres par seconde, de façon à maintenir dans les gaz effluents de ladite chambre un rapport $CO/CO_2$ compris entre 0,5 et 1,5, les grains de catalyseur au moins partiellement régénérés étant récupérés de préférence à la base dudit lit fluidisé, et en ce que, dans la partie supérieure du lit fluidisé, la suspension de grains de catalyseur est ralentie du fait d'un accroissement substentielle du diamètre de la chambre de régénération, de façon à ramener la vitesse superficielle des fluides ascendants, ne contenant plus d'oxygène, à une valeur comprise entre 0,5 et 1,5 mètres par seconde, c'est-à-dire à une valeur correspondant aux conditions de fluidisation en lit fluidisé dense.

Ainsi, la configuration du lit fluidisé conforme à la présente invention permet de maintenir, dans la section basse du lit, une vitesse des fluides suffisante pour permettre une diffusion axiale très rapide de l'oxygène vers le coke déposé et pour minimiser l'oxydation du monoxyde de carbone, malgré une cinétique de réaction défavorable par rapport à celle, beaucoup plus rapide, de l'oxydation du monoxyde de carbone en gaz carbonique, grâce à la vitesse élevée à laquelle le monoxyde formé est entraîné vers la partie supérieure du lit où tout l'oxygène se trouve épuisé. L'augmentation de diamètre du lit fluidisé, dans sa partie supérieure qui ne contient plus d'oxygène, permet alors de diminuer la vitesse du fluide ascendant par unité de surface et d'y maintenir des conditions du type lit fluidisé dense globalement à contre-courant.

Un premier avantage de la présente invention est lié à la présence, à la partie supérieure du lit fluidisé, d'une zone dense fluidisée par les effluents de la zone de combustion ne contenant plus d'oxygène : ces effluents, dont la température est de l'ordre de 700-720°C, d'une part, y assurent le préchauffage des grains de catalyseurs provenant du strippage, qui se déplacent globalement à contre- courant, et, d'autre part, y provoquent un strippage complémentaire, permettant de déplacer la vapeur d'eau, ainsi que les hydrocarbures relativement riches en oxygène entraînés avec le catalyseur ou absorbés dans ses pores. Cet avantage est encore majoré lorsque les grains de catalyseur en provenance de la zone de strippage proprement dite sont déversés de façon homogène et, de façon connue en soi, suivant toute la section de la chambre située au-dessus de la surface du lit fluidisé dense. Il résulte de ce strippage complémentaire que :

    – d'une part, la quantité de carbone restant à brûler sur le catalyseur est notablement diminuée et moins riche en hydrogène ;

    – d'autre part, la vapeur d'eau provenant du strippage et entraînée avec les effluents, ne rique plus d'endommager le catalyseur porté à haute température lors de la combustion du coke, ce qui se produit d'autant plus facilement que le catalyseur est contaminé par des métaux alcalins ou lourds ;

    – enfin, l'énergie de combustion des hydrocarbures ainsi strippés et du monoxyde de carbone contenu dans les effluents gazeux ascendants peut être entièrement récupérée dans une zone spécialement prévue à cet effet, en aval de la chambre de régénération, et n'est donc pas absorbée par le catalyseur.

Un autre avantage du procédé conforme à l'invention, tient au fait que les transferts thermiques y sont optimisés au sein du lit fluidisé dense : la température de combustion pourra ainsi être régulée par réinjection éventuelle de catalyseur régénéré, le cas échéant après refroidissement de celui-ci par passage dans un échangeur thermique ; grâce à la présence de la phase fluidisée dense, l'homogénéisation de la température sera presque instantanée et l'abaissement de la température qui en résulte pourra être utilement compensé par une augmentation du débit d'oxygène, ce qui favorisera d'autant la combustion du carbone dans la partie inférieure du lit fluidisé.

Un autre avantage du procédé est lié au fait que le lit fluidisé dense ne contient plus d'oxygène à la partie supérieure de la zone de régénération : des conditions réductrices peuvent donc y être créées par injection d'une quantité limitée de vapeur d'eau ; une partie du coke déposé sur le catalyseur sera alors susceptible de réagir de façon endothermique, en l'absence d'oxygène, avec cette vapeur d'eau, pour produire du monoxyde de carbone et de l'hydrogène, lesquels seront alors entraînés avec le fluide ascendant. De plus, cette réaction étant endothermique, le dosage de la quantité d'eau et de vapeur d'eau injectée permettra également de réguler la température de la zone de combustion à la partie inférieure du lit fluidisé.

Un avantage supplémentaire lié au procédé objet de la présente invention pourra en outre être obtenu soit en injectant dans la zone de combustion, dans la charge ou dans les divers recycles de la zone de réaction, soit en déposant sur le catalyseur préalablement à sa mise en oeuvre, des promoteurs d'oxydation du carbone en monoxyde de carbone (tels que, en particulier, les composés du cérium) pour améliorer, de façon connue en soi, la cinétique de cette combustion au détriment de la formation du gaz carbonique résultant de l'oxydation du CO. Parmi les promoteurs de combustion (voir à cet effet les brevets US 3 153 635, EP 120 096 et EP 211 340), on peut citer, à titre d'exemple, le kaolin et les dérivés du cérium, du magnésium, du chrome ou du phosphore. Selon une approche similaire, on peut également utiliser des additifs retardateurs d'oxydation du CO en $CO_2$, d'un type connu en soi, tels que, en particulier, les chlorures de magnésium ou de phosphore.

Enfin, un avantage particulièrement intéressant du procédé selon l'invention peut être obtenu par l'utilisation, en aval de la première chambre de régénération décrite précédemment, d'une deuxième chambre fonctionnant à température plus élevée. Ce type de régénération à deux chambres de combustion (toutes deux de préférence munies de leur propre dispositif d'évacuation des effluents gazeux) est particulièrement adapté aux unités de conversion des charges lourdes d'hydrocarbures, c'est-à-dire des charges contenant des proportions notables d'hydrocarbures à hauts points d'ébullition, telles que celles contenant des résines, des asphaltènes, des composés polyaromatiques, et de fortes teneurs en carbone Conradson et en métaux (voir à cet effet, la demande de brevet européen publiée N° 208 609, déposée par la Demanderese). On sait, en effet, qu'une bonne vaporisation de ces charges, préalablement à leur craquage catalytique, nécessite de porter leur température, dans la zone d'injection du réacteur, à des valeurs pouvant être comprises entre 500 et 700°C. Dans ces conditions et compte tenu du rapport quantité du catalyseur sur charge (communément appelé rapport "C/O"), la température souhaitable du catalyseur régénéré doit donc pouvoir être comprise entre environ 700 et 950°C, mais, pour préserver une durée de vie satisfaisante de ce catalyseur, il convient, bien entendu, de ne porter le catalyseur régénéré à de telles températures que pendant une durée aussi courte que possible et en atmosphère relativement sèche.

L'utilisation d'un dispositif de régénération conforme à la présente invention convient particulièrement à la régénération des catalyseurs de craquage des charges lourdes, dans la mesure où elle permet la combustion dans une première chambre de la majeure partie du coke, par exemple entre 50 et 90% du coke initialement déposé pendant la réaction, et le transfert dans une seconde chambre, fonctionnant en excès d'oxygène et à température non limitée (puisqu'il n'y a plus de vapeur d'eau susceptible d'endommager le catalyseur), du catalyseur contenant le coke résiduel, lequel sera totalement brûlé pour produire du $CO_2$. La température résultant de l'équilibre thermique qui s'établira sera généralement plus élevée et proche du niveau souhaité pour craquer les charges les plus lourdes.

La quantité de coke résiduel sur le catalyseur envoyé dans la deuxième chambre de régénération étant ainsi limitée au strict nécessaire, il devient possible, de façon connue en soi, de réaliser dans la deuxième chambre de régénération une combustion dans un lit fluidisé à co-courant ou à contre-courant, au cours de laquelle le temps de séjour du catalyseur à des températures comprises entre 750 et 950°C sera limité au strict minimum nécessaire pour une complète régénération.

L'invention a donc également pour objet un dispositif de régénération d'un catalyseur par combustion du coke déposé sur celui-ci au cours d'une réaction de conversion d'hydrocarbures, ce dispositif comprenant :

– au moins une chambre de combustion du coke, dans laquelle le catalyseur est maintenu en lit fluidisé à l'aide d'un fluide gazeux ;

– à la partie inférieure de cette chambre, des moyens d'alimentation dudit fluide gazeux en mélange avec de l'oxygène ;

– à la partie supérieure de cette chambre, des moyens d'évacuation des effluents gazeux ;

– à un niveau intermédiaire entre les moyens d'évacuation des effluents gazeux et le niveau supérieur de la suspension du catalyseur en lit fluidisé, des moyens d'alimentation de ladite chambre en catalyseur usé à régénérer ;

– à la base de ladite chambre et, de préférence, au-dessous des moyens d'alimentation en un fluide contenant de l'oxygène, des moyens d'évacuation du catalyseur au moins partiellement régénéré ;

ce dispositif étant caractérisé en ce que lesdits moyens d'alimentation (24, 25) assurent un débit en gaz oxydant supérieur à 3500 m³/hxm² dans la partie basse de la chambre de combustion, et en ce que la partie supérieure de la chambre de combustion possède une section dont le diamètre mesure entre 1,25 et 3,0 fois celui de la partie basse de ladite chambre.

La hauteur du lit fluidisé bouillonnant ainsi réalisé à la base de la zone de combustion, selon la présente invention, doit être suffisamment grande pour permettre la combustion complète de la quantité souhaitée de carbone déposé sur les grains de catalyseur, compte tenu de la quantité de fluide oxydant injectée. Cette hauteur sera toutefois calculée pour minimiser le temps de résidence du monoxyde de carbone produit et donc son oxydation avec l'oxygène éventuellement présent. Ce temps de résidence est généralement maintenu au-dessous de 5 secondes et, de préférence, au-dessous de 2 à 3 secondes.

La partie supérieure du lit fluidisé, dans laquelle les gaz de fluidisation seront épuisés en oxygène qu'ils contenaient, est donc constituée d'un lit fluidisé dense, dû à l'augmentation du diamètre de la chambre dans un rapport compris entre 1,25 et 3,0 fois celui de la zone située au-dessous, alors que la quantité de fluides ascendants demeure globalement inchangée. Cette phase fluidisée dense, dans laquelle la vitesse superficielle des fluides gazeux redescend à environ 0,2 à 1,5 m/s et, de préférence, 0,5 à 1,2 m/s, assure donc une homogénéisation rapide de la température des grains de catalyseur situés dans cette zone. La régulation en température de cette phase aussi près que possible d'une température de consigne peut être réalisée avantageusement de deux manières distinctes :

– par introduction dans cette zone d'une quantité variable de catalyseur au moins partiellement régénéré, après passage de ce catalyseur dans un échangeur thermique de type connu en soi ;

– par introduction dans cette zone dépourvue d'oxygène d'une quantité d'eau ou de vapeur d'eau suffisante pour permettre la décomposition thermique d'une partie du coke, tout en empruntant des calories au système ; cette eau ou vapeur d'eau sera avantageusement injectée à l'aide d'un diffuseur sous la forme d'un anneau tubulaire de grand diamètre situé à la périphérie du lit ; la quantité d'eau ou de vapeur d'eau ainsi injectée pourra, par exemple, être comprise entre 2 et 25 grammes par kilo de catalyseur en circulation.

Les catalyseurs susceptibles d'être traités dans le dispositif objet de la présente invention comprennent tous les catalyseurs de conversion sur lesquels du coke se dépose au cours d'une réaction. Ils comprennent, en particulier, tous les catalyseurs de craquage, parmi lesquels ceux du type silico-aluminates cristallins, certains types de silice-alumine, de silice-magnésie, de silice-zirconium, tous ayant des activités de craquage relativement élevées. Les silico-aluminates cristallins peuvent se trouver à l'état naturel ou être préparés par synthèse, selon des techniques bien connues de l'homme de l'art. Ils peuvent être choisis parmi les zéolithes de synthèse ou les argiles, telles que la faujasite, certaines mordenites, érionites ou offrétites, la montmorillonite, les argiles pontées, les alumino-phosphates, ou similaires.

Les dessins schématiques annexés illustrent une forme de mise en oeuvre de la présente invention. Ils n'ont toutefois aucun caractère limitatif. Sur ces dessins :

La figure 1 est un schéma d'une unité de craquage catalytique en lit fluidisé, équipée d'un dispositif de régénération conforme à l'invention ;

La figure 2 est un schéma d'une unité analogue, comportant un dispositif de régénération à deux chambres de combustion ;

La figure 3 représente une unité analogue à celle de la figure 2, équipée d'une variante du régénérateur à deux chambres de combustion.

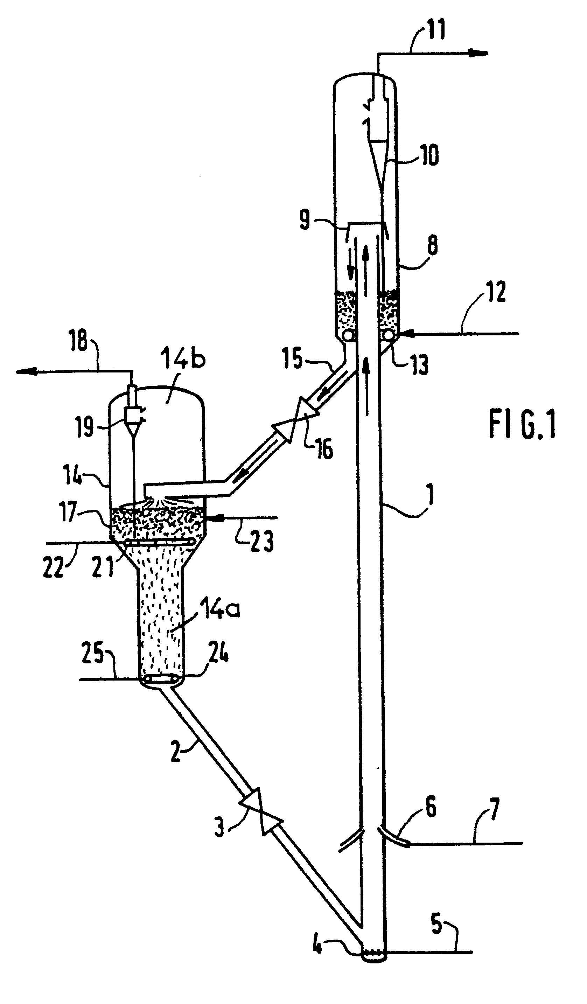

L'unité de conversion représentée sur la figure 1 et équipée du dispositif de régénération conforme à l'invention est une unité de craquage catalytique en lit fluidisé, dite aussi unité FCC, fonctionnant avec une seule chambre de régénération.

Elle comprend essentiellement une colonne 1, dite élévateur de charge, ou riser, alimentée à sa base, par la ligne 2, en grains de catalyseur régénéré, en quantité déterminée par l'ouverture ou la fermeture d'une vanne 3.

Le catalyseur est propulsé en phase diluée homogène dans le riser par injection à l'aide d'un diffuseur 4, alimenté par la ligne 5, de vapeur d'eau (ou d'un hydrocarbure léger). Le diffuseur est située dans le riser au-dessous de la ligne d'arrivée du catalyseur régénéré.

La charge à craquer est introduite à un niveau plus élevé du riser à l'aide d'un injecteur 6, alimenté par la ligne 7.

La colonne 1 débouche à son sommet dans une enceinte 8, qui lui est par exemple concentrique et dans

EP 0 322 274 B1

laquelle s'effectuent, d'une part, la séparation des effluents gazeux et du catalyseur, grâce au séparateur balistique 9, et, d'autre part, le strippage du catalyseur usé. Les produits de réaction sont épurés de tout catalyseur dans un système cyclonique 10, qui est ici logé dans l'enceinte 8 et au sommet duquel est prévue une ligne d'évacuation 11 des effluents, tandis que les particules de catalyseur usé sont réinjectées à la base de l'enceinte 8. Une ligne 12 alimente en gaz en strippage, généralement de la vapeur d'eau, le diffuseur 13, disposé à la base de l'enceinte 8.

Les particules de catalyseur usé ainsi strippées sont évacuées à la base de l'enceinte 8 vers un régénérateur 14, par l'intermédiaire d'un conduit 15, sur lequel est prévue une vanne de régulation 16.

Le régénérateur 14 comprend deux parties cylindriques superposées, 14a et 14b, la partie supérieure 14b ayant un diamètre supérieur à celui de la partie inférieure 14a. Un fluide gazeux oxydant alimente par la ligne 25 un diffuseur 26 disposé à la base de la partie 14a du régénérateur 14 et maintient en suspension le catalyseur en cours de régénération. Comme indiqué ci-dessus, du fait de la différence des diamètres des parties 14a et 14b, on obtient un lit bouillonnant de catalyseur dans la partie inférieure 14a et un lit fluidisé dense 17 dans la partie supérieure 14b.

Dans la partie 14b du régénérateur 14, les grains de catalyseur usé sont dispersés au-dessus de la surface du lit fluidisé dense 17 de façon à ce que les fluides ascendants, en provenance de ce lit, permettent une désorption rapide et à haute température de la vapeur d'eau et des hydrocarbures encore présents sur le catalyseur et soient évacués par la ligne 18 après passage dans un cyclone 19.

Dans la zone 17, où les gaz de fluidisation ne contiennent plus d'oxygène, les grains de catalyseur usé forment un lit fluidisé dense (du fait du faible débit par unité de surface) et les grains de catalyseur continuent à y être rechauffés et strippés par le fluide ascendant chaud contenant des quantités importantes de monoxyde de carbone.

Il est donc possible d'utiliser les propriétés de cette partie supérieure du lit fluidisé pour y injecter de l'eau ou de la vapeur d'eau par le diffuseur 21 alimenté par la ligne 22, en vue de transformer une partie du coke en monoxyde de carbone, tout en absorbant des calories de la zone 17, puisque cette réaction est endothermique.

Il est également possible d'injecter par la ligne 23 du catalyseur régénéré, prélevé dans la ligne 2 et refroidi dans un échangeur thermique de type connu en soi et non représenté sur la figure. Une régulation du débit de gaz oxydant dans la ligne 25, en fonction de la température régnant dans la zone 17, permet alors un ajustement de la température de combustion au-dessous d'un seuil de 750°C et de préférence 720°C.

Le catalyseur régénéré est prélevé par la ligne 2 à la base du lit fluidisé 14a, de sorte que les grains de catalyseur coké descendent du haut vers le bas du régénérateur, où ils rencontrent alors un fort débit de fluide oxydant, qui contient de plus en plus d'oxygène, au fur et à mesure que les grains se rapprochent du diffuseur 24 alimenté par la ligne 25. Dans ces conditions, une combustion maximum du coke est assurée, et la hauteur de la zone 14a, laquelle le fluide oxydant s'élève à une vitesse de préférence comprise entre 1,25 et 2,5 m/s, est adaptée suivant les cas pour assurer tout ou partie de la combustion du coke.

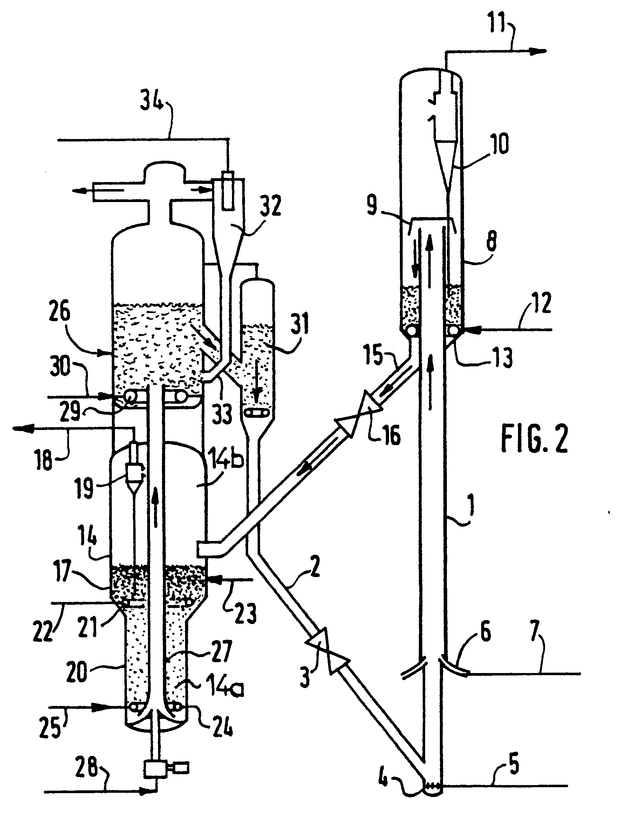

La figure 2 représente une variante d'unité FCC dans laquelle le dispositif de régénération comporte deux chambres de régénération du catalyseur usé, ce qui permet de fournir, à l'injection des charges d'hydrocarbures, un catalyseur à plus haute température, destiné en particulier au traitement de charges lourdes. Sur cette figure 2, les organes déjà décrits en relation avec la figure 1 sont désignés avec les mêmes chiffres de référence.

Le catalyseur usé ayant déjà subi un strippage dans l'enceinte 8 est acheminé par la conduite 15 dans une première chambre de combustion 14, du type de celle décrite en relation avec la figure 1 et dans laquelle une proportion de 50 à 90% du coke peut être brûlée conformément à la présente invention.

Les particules du catalyseur ayant subi un premier traitement de régénération sont ensuite transférées au second étage 26 du regénérateur par le conduit central 27, alimenté en air à sa base par la ligne 28.

La base du second étage 26 peut également être alimentée en air par le diffuseur 29, alimenté par la ligne 30, ce qui permet de faire fonctionner cette deuxième chambre de régénération en lit fluidisé avec un léger excès d'oxygène et, par conséquent, de laisser monter librement la température de combustion et donc celle du catalyseur régénéré. Les grains de ce catalyseur régénéré sont évacués latéralement dans une enceinte tampon 31 et recyclés par le conduit à l'alimentation de l'élévateur 1. Les gaz de combustion évacués à la partie supérieure de la chambre 26 sont traités dans un cyclone extérieur 32, à la base duquel les particules du catalyseur sont renvoyées par le conduit 33 dans la chambre 26, tandis que les gaz de combustion sont évacués par la ligne 34.

Cette forme de réalisation du dispositif conforme à l'invention, équipé ici de deux chambres de régénération à flux ascendant, présente les avantages suivants :

– une double régénération du catalyseur est assurée, permettant une combustion intégrale du coke déposé sur le catalyseur, sans altération notable de ses propriétés catalytiques ou physiques ;

6

— aucune limitation de la température n'existe dans le second régénérateur, ce qui permet au catalyseur d'acquérir la température requise pour, en particulier, vaporiser et craquer la charge lourde.

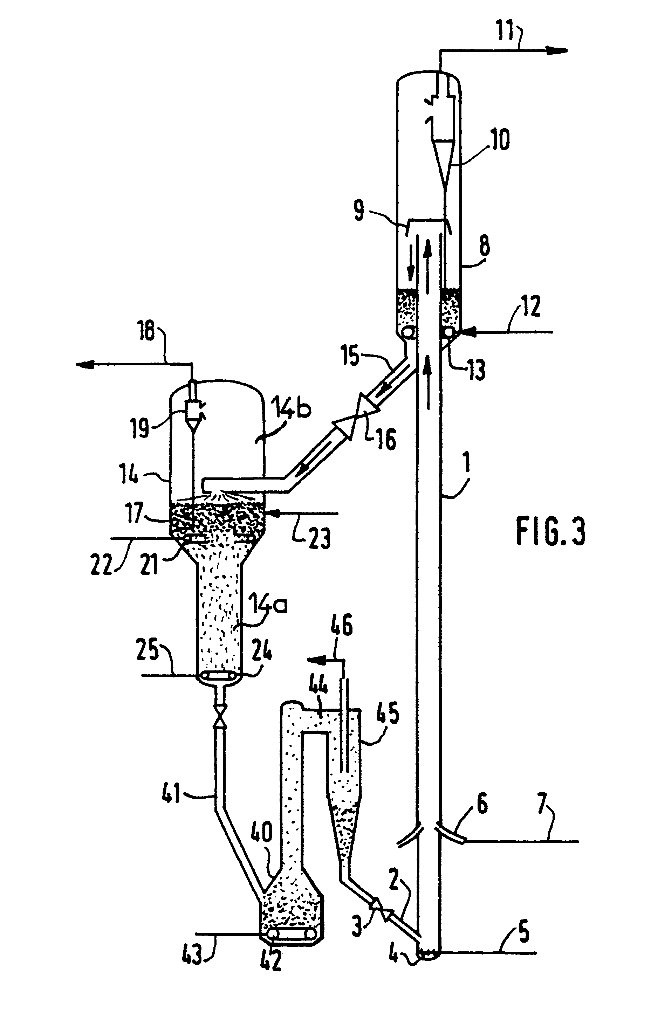

La figure 3 représente une unité de craquage catalytique en lit fluidisé équipée d'une variante de régénérateur à double chambre de combustion, dont la seconde chambre fonctionne cette fois en lit circulant, contrairement à celle du dispositif représenté sur la figure 2.

En effet, l'utilisation de cette configuration est particulièrement intéressante dans le cadre de la présente invention, dans la mesure où la combustion qui s'opère en majeure partie à co-courant dans la phase fluidisée assure un bon transfert de la chaleur de combustion sur les grains de catalyseur, tout en maintenant le temps de résidence du catalyseur inférieur à deux minutes, contre, en moyenne, 3 à 15 minutes dans le cas de la deuxième chambre fonctionnant à contre-courant représentée sur la figure 2.

Sur cette figure, les organes déjà décrits en relation avec la figure 1 sont à nouveau désignés par les mêmes chiffres de référence.

Le catalyseur usé ayant déjà subi un strippage dans l'enceinte 8 est acheminé par la conduite 15 dans la première chambre de combustion 14, dans laquelle une proportion de 50 à 90% du coke peut être brûlée conformément à la présente invention. Les particules du catalyseur ayant subi ce premier traitement de régénération sont cette fois transférées par gravité naturelle, par le conduit 41, au second étage 40 du régénérateur, à la base duquel est disposé un diffuseur 42, alimenté en air par la ligne 43.

Des conditions de fonctionnement en lit fluidisé sont prévues à la base de la zone 40 et sont suffisantes pour permettre l'homogénéisation d'une certaine quantité de grains de catalyseur pendant un temps très court, ainsi que l'amorçage de la combustion. Elles sont cependant limitées de façon à éviter un rétromélange excessif des grains de catalyseur : dans la pratique, le temps de séjour moyen dans cette zone sera inférieur à 2 minutes et, de préférence, à moins d'une minute.

Une accélération des gaz de fluidisation de cette seconde chambre est ensuite réalisée par un rétrécissement de la section transversale de la zone de régénération ; la vitesse de fluidisation devient alors suffisante pour déterminer un fonctionnement en lit entraîné. Au cours de la combustion qui en résulte, la température des grains augmente progressivement et peut monter jusqu'à environ 950°C.

Les gaz de fluidisation qui se mélangent aux fumées issues de la combustion sont évacués avec les particules entraînées à la partie supérieure de la chambre 40 par un conduit 44 qui débouche dans un séparateur 45. Ce séparateur est constitué ici d'un cyclone comportant une cheminée axiale permettant l'évacuation des gaz épurés vers un conduit de fumées 46 et dont le fond, en forme de trémie, débouche par une sortie inférieure dans le conduit 3 d'alimentation en catalyseur régénéré du réacteur 1. Dans la pratique, le temps de séjour moyen du catalyseur à une température supérieure à 775°C sera inférieur à 30 secondes et, de préférence, inférieur à 10 secondes.

L'exemple suivant illustre les avantages de l'invention.

## EXEMPLE

On envoie dans une unité de craquage catalytique, comprenant une colonne de craquage de type connu en soi, et un système de régénération de catalyseur du type représenté sur la figure 2, une charge lourde qui est ici un résidu de distillation atmosphérique directe (RAT). On utilise un catalyseur commercial, comprenant des zéolithes ultra-stabilisées et une matrice propre à craquer des molécules d'hydrocarbures les plus lourdes dans des conditions de craquage.

Deux essais ont été effectués avec la même charge, l'un dans des conditions usuelles de craquage et de régénération (essai A), l'autre (essai B) en utilisant un régénérateur du même type, mais modifié conformément aux caractéristiques de la présente invention.

La comparaison des conditions de fonctionnement de la première chambre de régénération permet de dresser le tableau comparatif suivant :

### TABLEAU

| | Essai A | Essai B |
|---|---|---|
| . Rapport des diamètres entre la partie supérieure et la partie inférieure du lit fluidisé : | 1,2 | 1,7 |
| . Teneur en hydrogène résiduel du coke dans la zone de combustion : | 6,5 | 5,0 |
| . Débit d'air injecté (kg/kg de coke) | 11,7-12,2 | 9,7-10,3 |
| . Rapport $CO/CO_2$ des effluents : | 0,25-0,40 | 0,9-1,4 |
| . Température de la partie supérieure du lit fluidisé : | 680-715 | 700-715 |
| . Chaleur de combustion du coke : | 7790-8240 | 5890-6480 |
| . % coke brûlé : | 40-60 | 70-90 |

On voit, sur cet exemple, que, selon le procédé usuel, le pourcentage de coke brûlé à la température indiquée (limitée à un maximum de 715°C) est bien inférieur à celui obtenu par le procédé selon l'invention. De plus, les teneurs élevées en CO des gaz effluents obtenues dans l'Essai B garantissent la récupération optimum de la chaleur de combustion de ce CO en aval du régénérateur, par des moyens connus dans la technique.

On a constaté, en outre, qu'une injection de 0,01 à 0,10 kg de vapeur d'eau par kilo de coke dans la partie supérieure du lit fluidisé permet, d'une part, d'abaisser la teneur en coke dans la zone de combustion et, d'autre part, d'augmenter le débit d'alimentation en air (et donc le taux de combustion du coke) pour compenser la perte de chaleur résultant de la réaction de cette vapeur d'eau sur le coke.

Enfin, l'inventaire du catalyseur porté à haute température (ici de l'ordre de 800 à 825°C) dans la seconde chambre de régénération est réduit de plus de 70%. Il s'en suit donc une longévité accrue du catalyseur et par conséquent de l'activité de ce dernier.

## Revendications

1. Procédé de régénération d'un catalyseur par combustion du coke déposé sur celui-ci au cours d'une réaction de conversion d'hydrocarbures, procédé dans lequel plus de 50% du coke est brûlé dans au moins une chambre de régénération (14) fonctionnant en lit fluidisé, ce procédé étant caractérisé en ce que la combustion du coke est réalisée à une température n'excédant pas 750°C et, de préférence, 720°C, dans un lit fluidisé dans lequel les grains de catalyseur circulent essentiellement de haut en bas à contre-courant d'un fluide contenant de l'oxygène dont la vitesse superficielle ascendante, à la base du lit fluidisé, est comprise entre 1,2 et 3,5 mètres par seconde, de façon à maintenir dans les gaz effluents de ladite chambre un rapport $CO/CO_2$ compris entre 0,5 et 1,5 les grains de catalyseur au moins partiellement régénérés étant récupérés de préférence à la base dudit lit fluidisé, et en ce que, dans la partie supérieure du lit fluidisé, la suspension de grains de catalyseur est ralentie du fait d'un accroissement substantiel du diamètre de la chambre de régénération, de façon à ramener la vitesse superficielle des fluides ascendants, ne contenant plus d'oxygène, à une valeur comprise entre 0,5 et 1,5 mètres par seconde, c'est-à-dire à une valeur correspondant aux conditions de fluidisation en lit fluidisé dense.

2. Procédé selon la revendication 1, caractérisé en ce que le catalyseur usé provenant de la zone de conversion des hydrocarbures est dispersé de façon homogène au-dessus de la surface ou dans la partie supérieure (17) du lit fluidisé ne contenant plus d'oxygène.

3. Procédé selon l'une des revendications 1 ou 2, caractérisé en ce que le rapport des diamètres entre la partie supérieure (14b) et la partie inférieure (14a) du lit fluidisé est compris entre 1,25 et 3,00.

4. Procédé selon l'une des revendications 1 à 3, caractérisé en ce que les temps de contact des gaz et

EP 0 322 274 B1

du catalyseur dans le lit fluidisé est inférieur à cinq secondes.

5. Procédé selon l'une des revendications 1 à 4, caractérisé en ce que la vitesse superficielle des fluides gazeux dans la partie supérieure du lit fluidisé ne contenant par d'oxygène est de l'ordre de 0,2 à 1,5 m/s et de préférence de l'ordre de 0,5 à 1,2 m/s.

6. Procédé selon l'une des revendications 1 à 5, caractérisé en ce que la combustion du carbone en oxyde de carbone est accélérée par la présence d'un accélérateur de combustion.

7. Procédé selon l'une des revendications 1 à 6, caractérisé en ce que la combustion du monoxyde de carbone en gaz carbonique est inhibée par la présence d'un retardateur d'oxydation du monoxyde de carbone.

8. Procédé selon l'une des revendications 1 à 7, caractérisé en ce que la régénération est complétée, dans la zone réductrice située à la partie supérieure du lit de catalyseur, par une réaction de gaz à l'eau obtenue par injection d'eau ou de vapeur d'eau dans cette zone.

9. Procédé selon la revendication 8, caractérisé en ce que l'injection d'eau ou de vapeur d'eau et la réaction résultante de gaz à l'eau sont telles que le catalyseur est refroidi.

10. Procédé selon l'une des revendications 1 à 9, caractérisé en ce que la température régnant dans la chambre de combustion (14) est stabilisée au-dessous d'une température limite de 750°C et, de préférence, de 720°C, par injection dans la partie supérieure de ce lit fluidisé de catalyseur régénéré et refroidi par passage dans un échangeur thermique.

11. Procédé selon l'une des revendications 1 à 10, caractérisé en ce qu'une proportion de 50 à 90% du coke déposé au cours de la réaction de conversion est brûlée dans une première chambre de régénération (14), et en ce que le coke restant est brûlé dans une seconde chambre de régénération (26, 40) en lit fluidisé, en présence d'un excès d'oxygène, à une température de préférence comprise entre 720 et 900°C.

12. Dispositif de régénération d'un catalyseur par combustion du coke déposé sur celui-ci au cours d'une réaction de conversion d'hydrocarbures, ce dispositif comprenant :
   – au moins une chambre (14) de combustion du coke, dans laquelle le catalyseur est maintenu en lit fluidisé à l'aide d'un fluide gazeux ;
   – à la partie inférieure de cette chambre, des moyens d'alimentation (24, 25) dudit fluide gazeux en mélange avec de l'oxygène ;
   – à la partie supérieure de cette chambre, des moyens d'évacuation (18) des effluents gazeux ;
   – à un niveau intermédiaire entre les moyens d'évacuation (18) des effluents gazeux et le niveau supérieur de la suspension du catalyseur en lit fluidisé ; des moyens d'alimentation (15) de la dite chambre en catalyseur usé à régénérer ;
   – à la base de ladite chambre et, de préférence, au-dessous des moyens d'alimentation en un fluide contenant de l'oxygène, des moyens d'évacuation (2) du catalyseur au moins partiellement régénéré ;
ce dispositif étant caractérisé en ce que lesdits moyens d'alimentation (24, 25) assurent un débit en gaz oxydant supérieur à 3500 m³/hxm² dans la partie basse (14a) de la chambre de combustion et en ce que la partie supérieure (14b) de la chambre de combustion posséde une section dont le diamètre mesure entre 1,25 et 3,0 fois celui de la partie basse (14a) de ladite chambre,

13. Dispositif selon la revendication 12, caractérisé en ce qu'il comporte, dans la partie supérieure (17) du lit fluidisé ne contenant pas d'oxygène, un diffuseur (21) connecté à des moyens d'alimentation en quantités déterminées d'eau ou de vapeur d'eau.

14. Dispositif selon l'une des revendications 12 et 13, caractérisé en ce qu'il comporte, dans la partie supérieure (17) du lit fluidisé ne contenant pas d'oxygène, un moyen de recyclage (23) de catalyseur au moins partiellement régénéré et préalablement refroidi par passage dans un échangeur thermique.

15. Dispositif selon l'une des revendications 12 à 14, caractérisé en ce qu'il comporte un diffuseur de type annulaire (24) pour la diffusion du fluide oxydant.

16. Dispositif selon l'une des revendications 12 à 15, caractérisé en ce qu'il comporte un moyen de mesure de la température de la partie supérieure (17) du lit fluidisé et un moyen de commande du débit de fluide oxydant asservi à ce moyen de mesure de façon telle que ladite température soit maintenue sensiblement constante.

17. Dispositif selon l'une des revendications 12 à 16, caractérisé en ce qu'il comprend une seconde chambre de combustion (26, 40) située en aval de la première chambre (14) et possédant des moyens propres d'évacuation des effluents gazeux, cette seconde chambre étant apte à brûler 10 à 30% du coke initialement déposé sur le catalyseur en présence d'un excès d'oxygène et à fournir à l'unité de conversion située en aval un catalyseur complètement régénéré à une température comprise de préférence entre 750° et 850°C.

18. Dispositif selon la revendication 17, caractérisé en ce que ladite seconde chambre de combustion (40) située en aval de la première, fonctionne en lit fluidisé circulant.

9

## Claims

1. A process for regenerating a catalyst by combustion of the coke deposited thereon in the course of a reaction for the conversion of hydrocarbons, in which process more than 50% of the coke is burnt in at least one regeneration chamber (14) operating in a fluidised bed, this process being characterised in that the combustion of the coke is carried out at a temperature not exceeding 750°C and, preferably, 720°C, in a fluidised bed in which the catalyst particles circulate substantially from the top downwards countercurrently to a fluid containing oxygen whose ascending surface velocity, at the base of the fluidised bed, is between 1.2 and 3.5 metres per second, so as to maintain in the effluent gases from said chamber a $CO/CO_2$ ratio of between 0.5 and 1.5, the at least partially regenerated catalyst particles being recovered preferably at the base of said fluidised bed, and in that, in the upper part of the fluidised bed, the suspension of catalyst particles is retarded as a result of a substantial increase in the diameter of the regeneration chamber so as to reduce the surface velocity of the ascending fluids, which no longer contain oxygen, to a value of between 0.5 and 1.5 metres per second, i.e. to a value corresponding to the fluidisation conditions in a dense fluidised bed.

2. A process according to claim 1, characterised in that the spent catalyst coming from the hydrocarbon conversion zone is dispersed in a homogeneous manner above the surface or in the upper part (17) of the fluidised bed no longer containing oxygen.

3. A process according to either of claims 1 or 2, characterised in that the ratio of the diameters of the upper part (14b) and the lower part (14a) of the fluidised bed is between 1.25 and 3.00.

4. A process according to any one of claims 1 to 3, characterised in that the contact times between the gases and the catalyst in the fluidised bed is less than five seconds.

5. A process according to any one of claims 1 to 4, characterised in that the surface velocity of the gaseous fluids in the upper part of the fluidised bed not containing oxygen is of the order of from 0.2 to 1.5 m/s and, preferably, of the order of 0.5 to 1.2 m/s.

6. A process according to any one of claims 1 to 5, characterised in that the combustion of the carbon to carbon monoxide is accelerated by the presence of a combustion accelerator.

7. A process according to any one of claims 1 to 6, characterised in that the combustion of the carbon monoxide to carbonic gas is inhibited by the presence of a carbon monoxide oxidation retarder.

8. A process according to any one of claims 1 to 7, characterised in that the regeneration is completed, in the reducing zone situated in the upper part of the catalyst bed, by a reaction of gas with water obtained by injecting water or steam into this zone.

9. A process according to claim 8, characterised in that the injection of water or steam and the resultant reaction of gas with water are such that the catalyst is cooled.

10. A process according to any one of claims 1 to 9, characterised in that the temperature prevailing in the combustion chamber (14) is stabilised below a limit temperature of 750°C and, preferably, 720°C, by injecting into the upper part of this fluidised bed regenerated catalyst which has been cooled by being passed through a heat exchanger.

11. A process according to any one of claims 1 to 10, characterised in that a proportion of from 50 to 90% of the coke deposited in the course of the conversion reaction is burnt in a first regeneration chamber (14), and in that the remaining coke is burnt in a second regeneration chamber (26, 40) in a fluidised bed, in the presence of excess oxygen, at a temperature of preferably between 720°C and 900°C.

12. A device for regenerating a catalyst by combustion of the coke deposited thereon in the course of a reaction for the conversion of hydrocarbons, said device comprising :
   – at least one combustion chamber (14) for coke, in which the catalyst is maintained in a fluidised bed by means of a gaseous fluid ;
   – in the lower part of this chamber, means (24, 25) for supplying said gaseous fluid mixed with oxygen ;
   – in the upper part of this chamber, discharge means (18) for gaseous effluents ;
   – at an intermediate level between the discharge means (18) for gaseous effluents and the upper level of the catalyst suspension in a fluidised bed, means (15) for supplying said chamber with spent catalyst to be regenerated ;
   – at the bottom of said chamber and, preferably, below the means for supplying a fluid containing oxygen, discharge means (2) for the at least partly regenerated catalyst ;
   said device being characterised in that said supply means (24, 25) ensure a flow of oxidising gas above 3500 $m^3/hxm^2$ in the lower part (14a) of the combustion chamber, and in that the upper part (14b) of the combustion chamber is of a section whose diameter is between 1.25 and 3.0 times that of the lower part (14a) of said chamber.

13. A device according to claim 12, characterised in that, in the upper part (17) of the fluidised bed not containing oxygen, it comprises a diffuser (21) connected to means for supplying given amounts of water or steam.

14. A device according to either of claims 12 and 13, characterised in that, in the upper part (17) of the fluidised bed not containing oxygen, it comprises a means (23) for recycling at least partly regenerated catalyst which has been previously cooled by being passed through a heat exchanger.

15. A device according to any one of claims 12 to 14, characterised in that it comprises a diffuser of annular type (24) for the diffusion of the oxidising fluid.

16. A device according to any one of claims 12 to 15, characterised in that it comprises a means for measuring the temperature in the upper part (17) of the fluidised bed and a means for controlling the flow of oxidising fluid which is under the control of said measuring means in such a way that said temperature is maintained substantially constant.

17. A device according to any one of claims 12 to 16, characterised in that it comprises a second combustion chamber (26, 40) disposed downstream of the first chamber (14) and having its own discharge means for effluent gases, said second chamber being adapted to burn 10 to 30% of the coke initially deposited on the catalyst in the presence of excess oxygen and to supply to the conversion unit disposed downstream a completely regenerated catalyst at a temperature of preferably between 750 and 850°C.

18. A device according to claim 17, characterised in that said second combustion chamber (40) disposed downstream of the first chamber operates as a circulating fluidised bed.

## Ansprüche

1. Verfahren zum Regenerieren eines Katalysators durch Verbrennung des auf demselben während einer Reaktion zur Umwandlung von Kohlenwasserstoffen abgelagerten Kokses, wobei mehr als 50% des Kokses in mindestens einer Wirbelschicht-Regenerationskammer verbrannt wird, dadurch **gekennzeichnet**, daß die Verbrennung des Kokses bei einer Temperatur von höchstens 750°C, vorzugsweise 720°C, in einer Wirbelschicht durchgeführt wird, in welcher die Katalysatorkörner im wesentlichen von oben nach unten im Gegenstrom zu einem sauerstoffhaltigen Strömungsmittel fließen, dessen aufsteigende Oberflächengeschwindigkeit an der Basis der Wirbelschicht zwischen 1,2 und 3,5 m/sec liegt, um in den aus der Kammer ausströmenden Gasen ein $CO/CO_2$-Verhältnis zwischen 0,5 und 1,5 aufrechtzuerhalten, wobei die mindestens teilweise regenerierten Katalysatorkörner vorzugsweise an der Basis der Wirbelschicht rückgewonnen werden, und daß im oberen Teil der Wirbelschicht die Katalysatorkörnersuspension aufgrund einer wesentlichen Vergrößerung des Durchmessers der Regenerationskammer verlangsamt wird, um die Oberflächengeschwindigkeit der aufsteigenden Strömungsmittel, welche keinen Sauerstoff mehr enthalten, auf einen Wert zwischen 0,5 und 1,5 m/sec zu bringen, also einen Wert, der den Wirbelbedingungen in dichter Wirbelschicht entspricht.

2. Verfahren nach Anspruch 1, dadurch **gekennzeichnet**, daß der von der Zone der Umwandlung der Kohlenwasserstoffe kommende gebrauchte Katalysator homogen oberhalb der Oberfläche oder im oberen Teil (17) der Wirbelschicht dispergiert wird, welcher keinen Sauerstoff mehr enthält.

3. Verfahren nach Anspruch 1 oder 2, dadurch **gekennzeichnet**, daß das Verhältnis der Durchmesser des oberen Teils (14b) und des unteren Teils (14a) der Wirbelschicht zwischen 1,25 und 3,00 liegt.

4. Verfahren nach Anspruch 1, 2 oder 3, dadurch **gekennzeichnet**, daß die Kontaktzeit der Gase und des Katalysators in der Wirbelschicht unter 5 sec liegt.

5. Verfahren nach einem der Ansprüche 1 bis 4, dadurch **gekennzeichnet**, daß die Oberflächengeschwindigkeit der gasförmigen Strömungsmittel im oberen Teil der Wirbelschicht, welche keinen Sauerstoff enthalten, in der Größenordnung von 0,2 bis 1,5 m/sec, vorzugsweise von 0,5 bis 1,2 m/sec, liegt.

6. Verfahren nach einem der Ansprüche 1 bis 5, dadurch **gekennzeichnet**, daß die Verbrennung des Kohlenstoffs zu Kohlenoxid durch die Gegenwart eines Verbrennungsbeschleunigers beschleunigt wird.

7. Verfahren nach einem der Ansprüche 1 bis 6, dadurch **gekennzeichnet**, daß die Verbrennung des Kohlenmonoxids zu Kohlendioxid durch die Gegenwart eines Kohlenmonoxidoxidations verzögerers inhibiert wird.

8. Verfahren nach einem der Ansprüche 1 bis 7, dadurch **gekennzeichnet**, daß das Regenerieren in der im oberen Teil der Katalysatorschicht gelegenen reduzierenden Zone durch eine Wassergasreaktion ergänzt wird, welche durch Einspritzen von Wasser oder Einblasen von Wasserdampf in diese Zone bewirkt wird.

9. Verfahren nach Anspruch 8, dadurch **gekennzeichnet**, daß das Wassereinspritzen oder das Wasserdampfeinblasen und die resultierende Wassergasreaktion so sind, daß der Katalysator abgekühlt wird.

10. Verfahren nach einem der Ansprüche 1 bis 9, dadurch **gekennzeichnet**, daß die in der Verbrennungskammer (14) herrschende Temperatur durch Einblasen von regeneriertem und durch Hindurchführen durch einen Wärmetauscher abgekühltem Katalysator in den oberen Teil dieser Wirbelschicht unterhalb einer Grenztemperatur von 750°C, vorzugsweise von 720°C, stabilisiert wird.

11. Verfahren nach einem der Ansprüche 1 bis 10, dadurch **gekennzeichnet**, daß ein Anteil von 50 bis 90% des während der Umwandlungsreaktion abgelagerten Kokses in einer ersten Regenerationskammer (14) und der restliche Koks in einer zweiten Wirbelschicht-Regenerationskammer (26, 40) in Gegenwart von Sauerstoff im Überschuß bei einer Temperatur vorzugsweise zwischen 720 und 900°C verbrannt wird.

12. Vorrichtung zum Regenerieren eines Katalysators durch Verbrennung des auf demselben während einer Reaktion zur Umwandlung von Kohlenwasserstoffen abgelagerten Kokses mit

– mindestens einer Kammer (14) zur Verbrennung des Kokses, in welcher der Katalysator mittels eines gasförmigen Strömungsmittels in einer Wirbelschicht gehalten wird,

– Zuführmitteln (24, 25) für das gasförmige Strömungsmittel in Mischung mit Sauerstoff am unteren Teil der Kammer,

– Abzugsmitteln (18) für die Abgase am oberen Teil der Kammer,

– Zuführmitteln (15) für gebrauchten und zu regenerierenden Katalysator in die Kammer auf einem Zwischenniveau zwischen den Abzugsmitteln (18) für die Abgase und dem oberen Niveau der Suspension des Katalysators in Wirbelschicht und

– Abzugsmitteln (2) für den mindestens teilweise regenerierten Katalysator an der Basis der Kammer, vorzugsweise unterhalb der Zuführmittel für sauerstoffhaltiges Strömungsmittel,

dadurch **gekennzeichnet**, daß die Zuführmittel (24, 25) einen Durchsatz größer als 3.500 m³/h. m² an oxydierendem Gas im unteren Teil (14a) der Verbrennungskammer gewährleisten und daß der obere Teil (14b) der Verbrennungskammer einen Querschnitt aufweist, dessen Durchmesser zwischen dem 1,25- und dem 3,0-fachen des Querschnittdurchmessers des unteren Teils (14a) der Kammer liegt.

13. Vorrichtung nach Anspruch 12, **gekennzeichnet** durch einen Diffusor (21) im oberen, keinen Sauerstoff enthaltenden Teil (17) der Wirbelschicht, welcher mit Mitteln zur Zufuhr von Wasser oder Wasserdampf in bestimmten Mengen verbunden ist.

14. Vorrichtung nach Anspruch 12 oder 13, **gekennzeichnet** durch ein Mittel (23) im oberen, keinen Sauerstoff enthaltenden Teil (17) der Wirbelschicht zur Rückführung von mindestens teilweise regeneriertem Katalysator, welcher zuvor in einem Wärmetauscher abgekühlt worden ist.

15. Vorrichtung nach Anspruch 12, 13 oder 14, **gekennzeichnet** durch einen ringförmigen Diffusor (24) zur Diffusion des oxydierenden Strömungsmittels.

16. Vorrichtung nach einem der Ansprüche 12 bis 15, **gekennzeichnet** durch ein Mittel zur Messung der Temperatur des oberen Teils (17) der Wirbelschicht und ein Mittel zur Steuerung des Durchsatzes des oxydierenden Strömungsmittels, welches von dem Temperaturmeßmittel angesteuert wird, so daß die besagte Temperatur im wesentlichen konstant bleibt.

17. Vorrichtung nach einem der Ansprüche 12 bis 16, **gekennzeichnet** durch eine zweite Verbrennungskammer (26, 40), welche der ersten Verbrennungskammer (14) nachgeordnet ist, eigene Abgasabzugsmittel aufweist und 10 bis 30% des ursprünglich auf dem Katalysator abgelagerten Kokses in Gegenwart von Sauerstoff im Überschuß verbrennen sowie der nachgeordneten Umwandlungseinheit einen vollständig regenerierten Katalysator bei einer Temperatur vorzugsweise zwischen 750°C und 850°C liefern kann.

18. Vorrichtung nach Anspruch 17, dadurch **gekennzeichnet**, daß die der ersten Verbrennungskammer nachgeordnete zweite Verbrennungskammer (40) mit Gleichstrom-Wirbelschicht arbeitet.

FIG.1

FIG. 2

FIG.3